# EUROPÄISCHE PATENTSCHRIFT

(11) **EP 2 246 647 B1**
(45) Veröffentlichungstag und Bekanntmachung des Hinweises auf die Patenterteilung: **14.02.2018**
(21) Anmeldenummer: 10004479.1
(22) Anmeldetag: 28.04.2010
(51) Int. Cl.: F24J 3/08

(54) **Erdwärmesonde**
Geothermal heat probe
Sonde d'échauffement de la terre

(30) Priorität: 29.04.2009 AT 6542009
(43) Veröffentlichungstag der Anmeldung: 03.11.2010
(73) Patentinhaber: Hypersond GmbH, 2345 Brunn am Gebirge (AT)
(72) Erfinder: Holzer, Ludwig, 4861 Schörfling am Attersee (AT); Mayrhofer, Martin, 4040 Linz (AT)
(74) Vertreter: Riebling, Peter

(56) Entgegenhaltungen:
- DE-U1-202008 012 055
- US-A- 5 461 876
- US-A- 5 561 985
- US-A- 5 816 314
- US-A1- 2004 194 929

## Beschreibung

Die Erfindung bezieht sich auf eine Erdwärmesonde, bevorzugt aus Edelstahl, mit einem äußeren Wärmetauscherrohr, mit einem inneren, zum Wärmetauscherrohr koaxialen Strömungsrohr, das im Bereich eines Sondenfußes mit dem Ringkanal zwischen Wärmetauscherrohr und Strömungsrohr in Strömungsverbindung steht und mit einem Sondenkopf zum Zu- und Abführen eines das Strömungsrohr und den Ringkanal zwischen Strömungsrohr und Wärmetauscherrohr gegensinnig durchströmenden Wärmeträgers.

Um Erdwärme vorteilhaft insbesondere für Heizzwecke nützen zu können, ist eine Erdwärmesonde bekannt (AT 505 457 A1), die ein äußeres Wärmetauscherrohr und ein inneres, zum Wärmetauscherrohr koaxiales Strömungsrohr umfasst, das im Bereich des unteren Sondenfußes mit dem sich zwischen dem Wärmetauscherrohr und dem Strömungsrohr ergebenden Ringkanal strömungsverbunden ist, so dass beispielsweise ein über einen Sondenkopf zugeführter Wärmeträger zunächst durch das innere Strömungsrohr zum Sondenfuß geleitet wird, bevor er gegensinnig den Ringkanal zwischen Strömungsrohr und Wärmetauscherrohr durchströmt und dabei über das Wärmetauscherrohr Erdwärme aufnimmt. Im Stand der Technik ist eine Wärmeträgerführung bekannt, die im Gegensatz zu Erdwärmesonden mit einer u-förmigen Rohrleitung für den Wärmeträger einen unmittelbaren Wärmeübergang vom Erdreich auf den im Heizbetrieb durch das innere Strömungsrohr zuströmenden Wärmeträger unterbindet. Der damit erzielte Wirkungsgrad ist, insbesondere bei vergleichsweise geringen Temperaturunterschieden zwischen dem zu- und dem abströmenden Wärmeträger, niedrig.

Mit der US 5 461 876 A wird eine modulare Erdwärmesonde mit einem äußeren Rohrmantel und einem inneren, zum Wärmetauscherrohr koaxialen Strömungsrohr offenbart. Mit der Ausführungsform besteht jedoch der Nachteil, dass mit dem starren Rohrmantel keine unterschiedlichen Temperaturbelastungen ausgeglichen werden können.

Die US 5 816 314 A offenbart mit beispielsweise den Figuren 2, 3 oder 4 ein wendelartiges Rohr, durch welches ein Strömungsmedium fließt. Zur besseren Isolierung kann dieses Rohr eine Vakuumisolierung aufweisen. Das Rohr ist jedoch starr ausgebildet, wodurch es keine unterschiedlichen Wärmeausdehnungen ausgleichen kann.

Die US 2004/194929 A1 offenbart unterschiedliche Anwendungen von Erdwärmesonden. Keine der dort abgebildeten Strömungsrohre kann jedoch eine unterschiedliche Wärmeausdehnung ausgleichen.

Der Erfindung liegt somit die Aufgabe zugrunde, eine Erdwärmesonde der eingangs geschilderten Art so auszugestalten, dass der Wirkungsgrad erheblich gesteigert wird und die unterschiedlichen Temperaturbelastungen in Bezug auf die Mantelflächen kompensiert werden.

Die Erfindung löst die gestellte Aufgabe durch die technische Lehre des Anspruches 1 und des Anspruches 14. Der Erfindung liegt die Erkenntnis zugrunde, dass bei herkömmlichen Erdwärmesonden das innere Strömungsrohr einen Gegenstromwärmetauscher zwischen den beiden Wärmeträgerströmen einerseits durch das Strömungsrohr und andererseits durch den Ringkanal zwischen dem äußeren Wärmetauscherrohr und dem Strömungsrohr darstellt, so dass im Heizbetrieb der durch das innere Strömungsrohr zutaufende Wärmeträger mit der Wirkung vorgewärmt wird, dass die Temperaturdifferenz zwischen dem im Wärmetauscherrohr zu erwärmenden Wärmeträgerstrom und dem Erdreich kleiner wird. Da der Wärmeübergang vom umgebenden Erdreich auf den Wärmeträger im Ringkanal zwischen dem äußeren Wärmetauscherrohr und dem inneren Strömungsrohr unter anderem von der Temperaturdifferenz zwischen diesen beiden Medien abhängt, kann der Wirkungsgrad der Wärmeübertragung vergrößert werden, wenn für eine möglichst große Temperaturdifferenz zwischen den wärmeaustauschenden Medien gesorgt wird, indem der Wärmeaustausch zwischen den gegensinnigen Wärmeträgerströmungen über das innere Strömungsrohr durch eine entsprechende Wärmeisolierung dieses Strömungsrohrs weitestgehend unterbunden wird. Die thermische Trennung der zu- und ablaufenden Wärmeträgerströmungen macht sich selbstverständlich nicht nur beim Heizbetrieb, sondern auch im Kühlbetrieb vorteilhaft bemerkbar, bei dem über den durch das äußere Wärmetauscherrohr zulaufenden Wärmeträger Wärme an das Erdreich abgegeben wird, um den gekühlten Wärmeträger über das innere Strömungsrohr abzuziehen.

Besonders vorteilhafte Bedingungen hinsichtlich der Wärmeisolierung ergeben sich, wenn das Strömungsrohr mit einem evakuierten Doppelmantel versehen ist, weil mit Hilfe eines Vakuums im Zwischenraum zwischen dem Außen- und dem Innenmantel des Strömungsrohrs ein Wärmeübergang zwischen Außen- und Innenmantel weitgehend unterbunden werden kann. Eine solche gute Wärmeisolierung bedingt allerdings ungleichmäßige Wärmedehnungen der beiden Mäntel, die ja einerseits den zu- und andererseits den ablaufenden Wärmeträgerströmungen und damit ungleichen Temperaturbelastungen ausgesetzt sind. Zur Berücksichtigung dieser unterschiedlichen Temperaturbelastungen kann ein Ende des Außenmantels des Strömungsrohrs gegenüber dem Innenmantel axial verschiebbar abgestützt sein. Zu diesem Zweck kann das axial verschiebbare Ende des Außenmantels des Strömungsrohrs axial an einem den Innenmantel umschließenden, evakuierten Balg abgestützt werden, was den Vorteil mit sich bringt, dass auch im Balgbereich die Wärmeisolierung nicht unterbrochen wird.

Aufgrund unterschiedlicher Wärmebeanspruchungen ergeben sich auch zwischen dem Wärmetauscherrohr und dem Strömungsrohr unterschiedliche Wärmedehnungen, insbesondere bei unterschiedlichen Rohwerkstoffen. So kann beispielsweise der Doppelmantel des Strömungsrohrs aus einem rostfreien Stahl hergestellt werden, währen das Wärmetauscherrohr einen Kunststoffmantel, Schmelzbasaltmantel oder andere Werkstoffe aufweist. Um unterschiedliche Wärmedehnungen zu berücksichtigen, kann das Strömungsrohr den verschiebefest mit dem Wärmetauscherrohr verbundenen Sondenkopf axial verschiebbar durchsetzen, so dass aufgrund der Möglichkeit einer axialen Relativbewegung zwischen Wärmetauscherrohr und Strömungsrohr für einen Längenausgleich bei unterschiedlichen Wärmedehnungen gesorgt ist.

Um bei größeren Bohrlochtiefen einfachere Montageverhältnisse sicherzustellen und eine Vormontage des Strömungsrohrs zu ermöglichen, kann das Strömungsrohr aus einzelnen je für sich mit einer Wärmeisolierung versehenen Rohrstutzen über Kupplungsmuffen zusammengesetzt werden. Die Verbindung dieser einzelnen Rohrstutzen mit Hilfe von die Enden der Rohrstutzen übergreifenden Kupplungsmuffen ist insbesondere dann vor Ort ohne Aufwand vorzunehmen, wenn der Innenmantel des evakuierten Doppelmantels der Rohrstutzen über den Außenmantel axial vorsteht und wenn die vorstehenden Innenmäntel der Rohrstutzen miteinander über die Kupplungsmuffen verbunden werden, so dass bei der Verbindung der Rohrstutzen der evakuierte Doppelmantel außerhalb der Verbindung liegt. Da die Kupplungsmuffe selbst eine Wärmeisolierung darstellen kann, fällt die axiale Unterbrechung der Vakuumisolierung im Stoßbereich der Rohrstutzen nicht ins Gewicht.

Damit nach der Evakuierung des Doppelmantels des Strömungsrohrs unter Umständen volatile Stoffe oder verbleibende Restfeuchtigkeit gebunden werden können, kann der evakuierte Zwischenraum des Doppelmantels des Strömungsrohrs ein Absorptionsmittel aufweisen, beispielsweise Kieselgur oder Aktivkohle.

In der Zeichnung ist der Erfindungsgegenstand beispielsweise dargestellt. Es zeigen:
- Figur 1:: eine erfindungsgemäße Erdwärmesonde ausschnittweise im Bereich des Sondenkopfes in einem vereinfachten Längsschnitt
- Figur 2:: diese Erdwärmesonde im Bereich des Sondenfußes
- Figur 3:: Schnitt durch eine Erdwärmesonde am unteren Teil, wobei diese Erdwärmesonde aus Modulen zusammengesetzt ist
- Figur 4:: ein vergrößerter Schnitt durch das Strömungsrohr, welches als Doppelmantel-Koaxialrohr ausgebildet ist
- Figur 5:: ein vergrößerter Teilschnitt durch den oberen Teil der Erdwärmesonde mit einem hängend im Sondenkopf angeordneten Wärmetauscherrohr
- Figur 6:: eine Alternative zu Figur 5, wo das Wärmetauscherrohr stehend ausgebildet ist
- Figur 7:: ein Teilschnitt durch den oberen Teil des Wärmetauscherrohrs mit Nachstellung einer am Sondenkopf veränderten Befestigung des Wärmetauscherrohrs
- Figur 8:: Schnitt in Höhe des Sperrstabes nach Figur 7

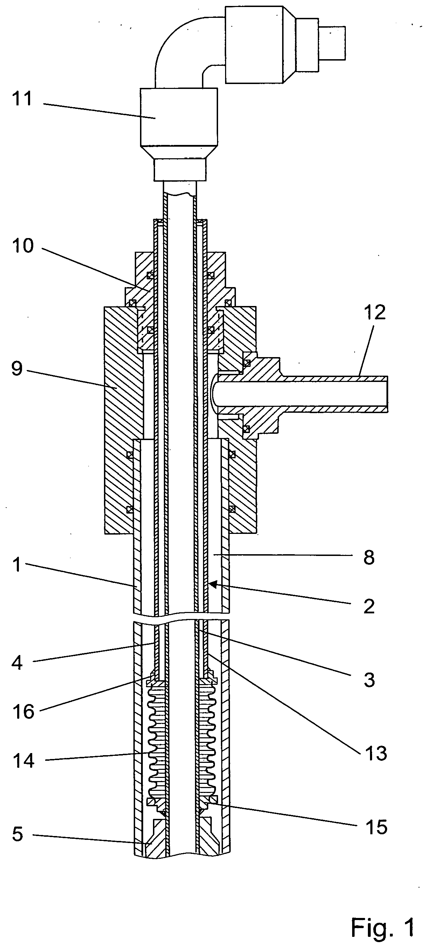

Die Erdwärmesonde gemäß dem dargestellten Ausführungsbeispiel (Fig. 1) weist ein äußeres Wärmetauscherrohr 1 auf, das ein koaxiales, inneres Strömungsrohr 2 aufnimmt. Dieses innere Strömungsrohr 2 ist aus einzelnen Rohrstutzen zusammengesetzt, die jeweils einen evakuierten Doppelmantel aus einem strömungsführenden Innenmantel 3 und einem Außenmantel 4 aufweisen. Die einzelnen Rohrstutzen sind über Kupplungsmuffen 5 miteinander verbunden, in die die über den Außenmantel 4 vorstehenden Enden des Innenmantels 3 dicht verschweißt sind. Das aus den einzelnen Rohrstutzen zusammengesetzte Strömungsrohr 2 ruht lastabtragend auf einem Sondenfuß 6 auf, in dessen Bereich eine Strömungsverbindung 7 zwischen dem koaxialen. Strömungsrohr 2 und dem Ringkanal 8 vorgesehen ist, der sich zwischen dem äußeren Wärmetauscherrohr 1 und dem inneren Strömungsrohr 2 ergibt.

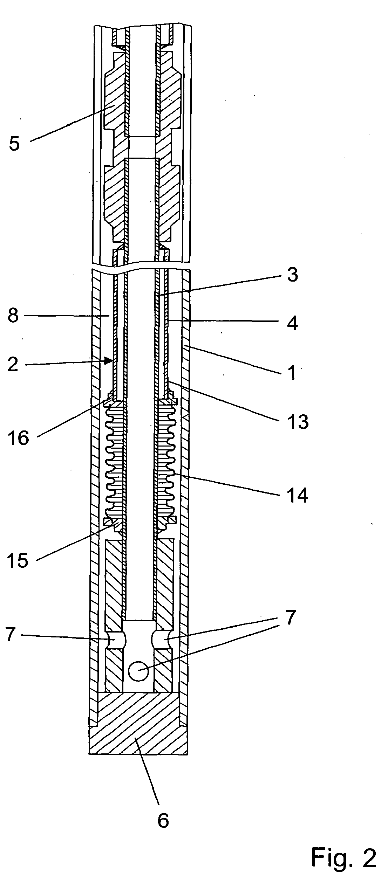

Am oberen Ende des Wärmetauscherrohrs 1 ist ein Sondenkopf 9 vorgesehen, den das Strömungsrohr 2 in einer Buchse 10 axial verschiebbar durchsetzt, so dass das über den Sondenkopf 9 vorstehende Ende des Strömungsrohrs 2 mit einem entsprechenden Anschluss 11 für einen Wärmeträger versehen werden kann. Die Anschlussverbindung des Ringkanals 8 wird durch einen Anschlussstutzen 12 im Sondenkopf 9 sichergestellt. Für einen Heizbetrieb kann daher ein Wärmeträger über den Anschluss 11 durch das Wärmetauscherrohr 2 bis zum Sondenfuß 6 (Fig. 2) strömen, um dann über die Strömungsverbindung 7 in den Ringkanal 8 zwischen dem Wärmetauscherrohr 1 und dem Strömungsrohr 2 auszutreten. Während der Wärmeträger im Ringkanal 8 im Wärmetauscherrohr 1 nach oben strömt, nimmt er über das Wärmetauscherrohr 1 Erdwärme auf und kann daher über den Anschlussstutzen 12 beispielsweise einer Wärmepumpe zugeführt werden. Im Kühlbetrieb wird der warme Wärmeträger gegensinnig zum Heizbetrieb geführt und strömt über den Anschlussstutzen 12 in den Ringkanal 8, um seine Wärme über das Wärmetauscherrohr 1 an das umgebende Erdreich abzugeben. Der gekühlte Wärmeträger wird dann über die Strömungsverbindung 7 in das Strömungsrohr 2 geleitet und kann über den Anschluss 11 des Strömungsrohrs 2 abgezogen werden.

Um unabhängig vom Heiz- bzw. Kühlbetrieb einen Wärmeaustausch zwischen dem durch das Strömungsrohr 2 strömenden Wärmeträger und dem gegensinnigen Wärmeträgerstrom durch den Ringkanal 8 weitgehend zu unterbinden, ist das Strömungsrohr 2 mit einer Wärmeisolierung in Form eines evakuierten Doppelmantels versehen. Diese aufgrund des Vakuums zwischen Innen- und Außenmantel 3, 4 besonders wirkungsvolle Wärmeisolierung bedingt allerdings unterschiedliche Wärmebelastungen des Innen- und des Außenmantels 3, 4 aufgrund der Temperaturunterschiede zwischen den Wärmeträgerströmen innerhalb des Strömungsrohrs 2 und des Ringkanals 8. Damit dadurch bedingte unterschiedliche Wärmedehnungen ausgeglichen werden können, ist ein Ende 13 des Außenmantels 4 des Strömungsrohrs 2 bzw. der einzelnen Rohrstutzen gegenüber dem Innenmantel 3 axial verschiebbar abgestützt. Obwohl sich hierfür unterschiedliche konstruktive Maßnahmen eignen, ergeben sich besonders vorteilhafte Konstruktionsbedingungen, wenn das axial verschiebbare Ende 13 des Außenmantels 4 an einem den Innenmantel 3 umschließenden, evakuierten Balg 14 axial abgefangen wird. Von den stirnseitigen Deckeln 15 und 16 dieses Balges 14 ist der mit dem Ende 13 des Außenmantels 4 verschweißte Deckel 16 axial verschiebbar auf dem Innenmantel 3 gelagert, während der gegenüberliegende Deckel 15 verschiebefest mit dem Innenmantel 3 verbunden ist. Durch diese Maßnahme wird in vorteilhafter Weise ein Längenausgleich zwischen dem Innen- und Außenmantel 3 und 4 ermöglicht. Die Relativverschiebung zwischen dem Wärmetauscherrohr 1 und dem Strömungsrohr 2 wird durch die verschiebbare Führung des Strömungsrohres 2 in der Buchse 10 des Sondenkopfes 9 erreicht, wobei sich der Außenmantel 4 über die Buchse 10 hinaus streckt, um einen Wärmeübergang zwischen dem durch das Strömungsrohr 1 geführten Wärmeträgerstrom und dem Wärmeträgerstrom durch den Sondenkopf 9 zu unterbinden.

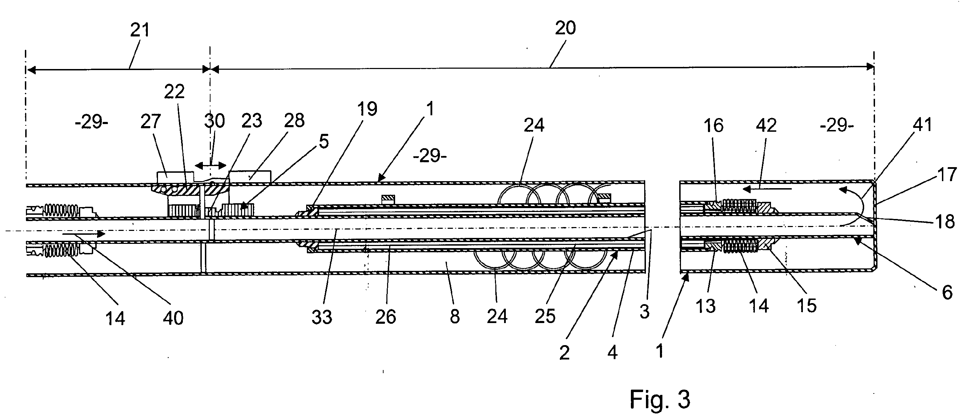

In Figur 3 ist ein Wärmetauscherrohr 1 dargestellt, welches aus zwei miteinander verbundenen Modulen 20, 21 besteht. Das eine Modul ist das Endmodul 20, welches den untersten Teil des Wärmetauscherrohres 1 bildet, während eine Vielzahl von sich daran dichtend anschließenden weiteren Modulen 21 daran angeschlossen sind.

Die Verbindung zwischen den einzelnen Modulen 20, 21 und allen weiteren Modulen 21 ist durch eine innere und äußere abdichtende Verbindung gekennzeichnet.

Die äußere Verbindung zwischen dem Wärmetauscherrohr 1 des einen Moduls 20 und dem sich daran anschließenden Wärmetauscherrohr 1 des sich daran anschließenden Moduls 21 besteht bevorzugt aus einer dichtenden Steckverbindung 22, wobei an der einen Rohrwandung eine Stecköffnung und an der anderen gegenüberliegenden Rohrwandung ein Stecker angeordnet ist.

Statt einer solchen Steckverbindung 22 können jedoch auch andere Verbindungen gewählt werden, insbesondere eine Orbitalschweißverbindung und dergleichen mehr.

Das innere Strömungsrohr 2, welches als Doppelmaritel-Koaxialrohr ausgebildet ist, ist mit einer Kupplungsmuffe 5 verbunden, die eine Verschraubung 23 ausbildet, die bevorzugt als Ermeto-Verbindung für hohe Drücke ausgebildet ist.

Statt einer solchen Verschraubung, die als Ermeto-Verbindung ausgebildet ist, können auch andere Verbindungen gewählt werden, wie z.B. ebenfalls eine Steckverbindung, eine Orbitalschweißverbindung oder andere Verbindungsvarianten. Wichtig ist, dass in diesem Bereich, wo die Module 20, 21 und alle weiteren Module jeweils miteinander verbunden sind, für einen axialen Längenausgleich gesorgt wird, wenn das Wärmetauscherrohr 1 sich wärmebedingt in axialer Richtung ausdehnt.

Um hierbei die Verbindungen der Wärmetauscherrohre 1 nicht unter einen zusätzlichen Stress zu bringen, weil diese in dem Verfüllungsraum 29 formschlüssig eingebracht sind, ist nach einer weiteren Variante der Erfindung vorgesehen, dass aufwärts und abwärts der jeweiligen Verbindung, insbesondere der Steckverbindung 22 jeweils ein Dehnungsring 27, 28 formschlüssig auf den Außenmantel des Wärmetauscherrohrs 1 aufsitzt, wobei der Dehnungsring 27, 28 aus einem elastischen Material, bevorzugt einem Kunststoffschaum-Material besteht.

Somit formt sich der Dehnungsring 27, 28 in den Verfüllungsraum 29 ein und hält aber den vom jeweiligen Dehnungsring 27, 28 abgedeckten Bereich am Außenumfang des Wärmetauscherrohrs 1 frei, so dass sich die Steckverbindung 22 bei axialer Ausdehnung des Wärmetauscherrohrs 1 in den Pfeilrichtungen 30 in den von den Dehnungsringen 27, 28 abgedeckten Freiraum hineinbewegen kann.

Als weiteres Merkmal zeigt die Figur 3, dass zur Zentrierung des als Doppelmantel-Koaxialrohr ausgebildeten Strömungsrohres 2 im Wärmetauscherrohr 1 sogenannte Zentrierfedern 24 im Ringkanal 8 angeordnet sind. Der Ringkanal ist gebildet durch den Innenumfang des Wärmetauscherrohrs 1 und den Außenumfang des Strömungsrohrs 2.

Wenn nun in diesem Bereich elastisch federnde Elemente, insbesondere Zentrierfedern 24 angeordnet sind, kommt es nicht zu einer unerwünschten Dezentrierung des Strömungsrohres 2 im Wärmetauscherrohr 1.

Solche Zentrierfedern 24 sind bevorzugt als Ovalfedern ausgebildet. Es handelt sich hierbei um Federstahlelemente, die einen runden Drahtquerschnitt aufweisen, die aber quasi-ovale Federwindungen bilden, wobei jede Federwindung zur benachbarten Federwindung jeweils um 45° am Umfang versetzt ist, um so eine gleichmäßige punktartige Abstützwirkung auf den Innenraum zu erzielen und so das Strömungsrohr 2 mit möglichst strömungsgünstigen Zentrierfedern 24 sicher zu zentrieren.

Dank der Tatsache, dass die Windungen oval jeweils um 45° zueinander versetzt sind, ergibt sich praktisch kein Strömungshindernis im Ringkanal. Man bekommt sogar eine erwünschte turbulente Strömung im Ringkanal 8, was zu einem deutlich besseren Wärmeübergang führt als bei glatten Rohren.

Es wird noch angefügt, dass nach einem weiteren Merkmal der Erfindung auch eine Vakuumkammer 26 vorhanden ist, die im Bereich des Strömungsrohres 2 angeordnet ist, und zwar im Zwischenraum zwischen dem Innenmantel 3 und dem Außenmantel 4. Eine derartige Vakuumkammer 26 ist in allen Modulen vorhanden und soll eine optimale Isolierung des Doppelmantel-Koaxialrohres (Strömungsrohr 2) in Richtung auf dem Ringkanal 8 des Wärmetauscherrohres 1 erbringen.

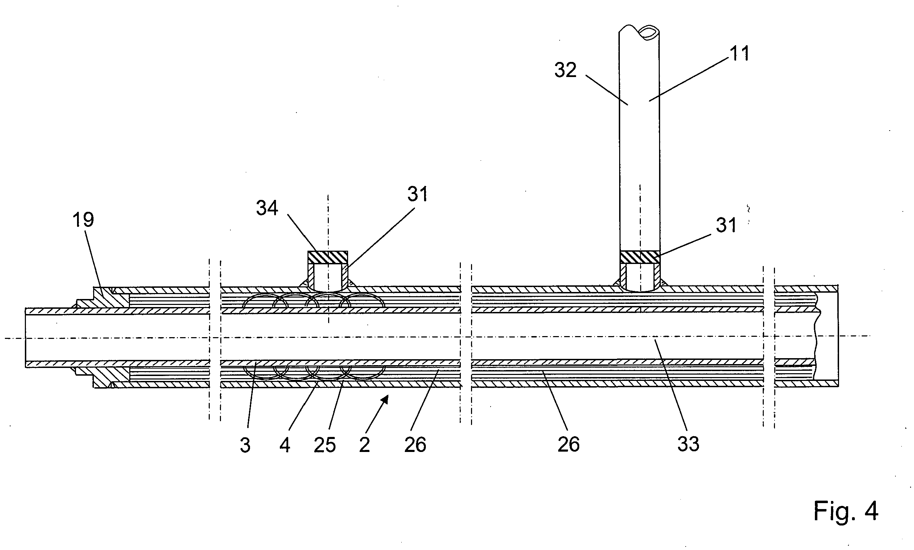

Auch hier ist vorgesehen, dass in der Vakuumkammer eine Anzahl von Zentrierfedern 25 vorhanden sind, die näher noch in Figur 4 dargestellt sind. Auch hier wird dafür gesorgt, dass der Innenmantel 3 sich zentrisch zu dem Außenmantel 4 dauerhaft abstützt und durch die Zentrierfeder 25 oder ähnliche Abstandhaltereinrichtungen punktartig abgestützt wird, ohne dass es zu unerwünschten wärmebedingten Verformungen oder Berührungen dieser beiden Rohre 3, 4 kommt.

In jedem Modul 20, 21 erstreckt sich die Vakuumkammer 26 von einem Passring 19 ausgehend axial nach unten durch einen Deckel 16 hindurch und ebenfalls hindurchgehend durch den Wärmeausdehnungsbalg 14 bis zu einem Deckel 15, so dass auch der Balg 14 von dem Vakuumraum 26 durchsetzt ist.

Dies sorgt dafür, dass eine optimale Wärmeisolierung gegeben ist, weil eben auch der Balg 14 durch das Vakuum wärmeisoliert ausgebildet ist und keine unerwünschte Wärmeübertragung in den Ringkanal 8 erfolgen kann. Die Strömung des Wärmeträgermediums erfolgt somit gemäß Figur 3 in Pfeilrichtung 40 im Vorlaufraum 33 des Strömungsrohres 2 und wird dort am Sondenfuß 6 über eine Schräge 18 austreten und in Pfeilrichtung 41 umgelenkt werden, um so in den Ringkanal 8 in Pfeilrichtung 42 wieder aufwärts zu strömen.
Es versteht sich von selbst, dass alle angegebenen Pfeilrichtungen auch umgedreht werden können und auch eine umgedrehte Strömungsrichtung des Wärmeträgermediums vorgesehen sein kann.

Durch die Anbringung einer Schräge 18 im Rohrquerschnitt ist vorgesehen, dass die Schräge 18 außerhalb der Achse (Längsachse) um z.B. einen Millimeter versetzt ist, um so einen gleichen Ausströmquerschnitt in der Schräge 18 bezüglich des übrigen Rohrquerschnittes des Strömungsrohres 2 zu gewährleisten.

Damit erfolgt ein ohne Strömungswiderstand sich ergebender Übergang des Wärmeträgermediums, welches in Pfeilrichtung 41 am Sondenfuß 6 umgelenkt wird. Statt der schrägen Öffnung können auch Öffnungen gezackt, gewellt oder in anderer Form ausgebildet sein.

Die Figur 4 zeigt einen Querschnitt durch das Strömungsrohr 2 im Bereich des Evakuierungsröhrchens (Vakuumraum 26). Zwischen Außenmantel 4 und Innenmantel 3 des Strömungsrohrs 2 sind nochmals, anhand der Figur 3, eine Anzahl der erwähnten Zentrierfedern 25 angeordnet.

Die Zentrierfedern sollen gemäß der vorstehenden Beschreibung eine Zentrierung des Innenmantels 3 zum Außenmantel 4 ergeben. Es handelt sich wiederum um Federstahlelemente, die als Drahtrundquerschnitt mit Ovalfedern-Federwindungen ausgebildet sind, so wie es anhand der Zentrierfeder 24 vorstehend beschrieben wurde.

Statt der hier dargestellten Zentrierfeder 25 sind selbstverständlich auch noch andere Zentrierelemente möglich, wie z.B. abstandshaltende Zentrierringe aus Edelstahl oder Teflon, wobei die Ringe radial vorstehende Vorsprünge aufweisen, oder gebogene Wellfederabschnitte, welche sich federnd zwischen dem Innenmantel 3 und dem Außenmantel 4 abstützen.

Wesentlich ist also nur, dass mit elastomeren Elementen eine Zentrierung zwischen dem Innenmantel 3 und dem Außenmantel 4 im Bereich der Vakuumkammer 26 mit punktartiger Auflage stattfindet.

Die Herstellung des Vakuums wird anhand der Figur 4 näher erläutert.

In Figur 4 ist dargestellt, dass das Vakuum bereits schon in der Vakuumkammer 26 eingebracht ist, weil an dem entsprechenden Rohrstummel 31 bereits schon die Verschlüsse 34 angebracht sind.

Zur Einbringung des Vakuums ist jedoch vorgesehen, dass an beiden Rohrstummeln 31 jeweils ein aus Edelstahl bestehender Rohranschluss 32 dichtend angesetzt wird, an den ein Vakuum angelegt wird. Das Vakuum wird durch eine Vakuumpumpe erzeugt. Es wurde ein Vakuum von x*10⁻⁴ mbar erzeugt, was im Prinzip ein Hochvakuum darstellt.

Hieraus ergibt sich, dass eine ausgezeichnete Wärmeisolierung im Bereich des Strömungsrohres 2 für jedes Modul 20, 21 vorgesehen ist, das bisher bei Erdwärmesonden noch nicht bekannt war.

Im Prinzip bestimmt der Rohrdurchmesser des Rohrstummels 31 die Höhe des erreichbaren Vakuums. Im gezeigten Ausführungsbeispiel ist der Durchmesser 8 mm gewählt worden, und der Rohrstummel hat eine entsprechende Höhe.

Nach der Einbringung des Vakuums werden die Verschlüsse 34 durch Abschweißen unter Vakuum hergestellt und die Rohranschlüsse 32 werden abgetrennt.

Wenn also ein Röhrchen mit einem Rohrstummel 31 von 8 mm Innendurchmesser gewählt wird, kann ein Hochvakuum im Bereich von x*10⁻⁴ mbar erzeugt werden.

Wie dieses Vakuum erzeugt wird, ergibt sich aus der allgemeinen Beschreibung, die auf spezielle Erzeugung des Vakuums durch eine speziell dafür entwickelte Erwärmungsanlage. Bezug nimmt.

Durch eine Widerstandsheizung wird eine Erwärmungsanlage in Betrieb genommen, die das Strömungsrohr 2, bestehend aus Außenmantel 4 und Innenmantel 3, die den ringförmigen Hohlraum des Strömungsrohrs 2 bilden, bis über den Siedepunkt von Wasser erwärmt und dadurch die in der mikroskopisch zerklüfteten Oberfläche gefangenen Wassermoleküle entfernt und ebenfalls andere flüchtige Stoffe, so dass damit eine wesentlich bessere Vakuumqualität erzielt werden kann. Außerdem kann das Vakuum auch schneller erzeugt werden, weil eben die das Vakuum verhindernden oder schädlich für das Vakuum sich auswirkenden Stoffe durch die Erwärmung auf bis über den Siedepunkt von Wasser entfernt werden.

Selbst wenn über die Lebensdauer die Erdwärmesonde gesehen das erfindungsgemäß angebrachte Vakuum von x*10⁻⁴ mbar sich auf einen Wert von z.B. 1 mbar verschlechtern würde, sind noch immer ausgezeichnete Wärmeisolierungswerte vorhanden, die in der Vakuumkammer 26 gegeben sind, um so eine optimale Wärmeisolierung zwischen dem Strömungsrohr 2 und dem Wärmetauscherrohr 1 zu ermöglichen.

Es kann grundsätzlich ohne Getter-Materialien und ohne Adsorptions-Materialien gearbeitet werden.

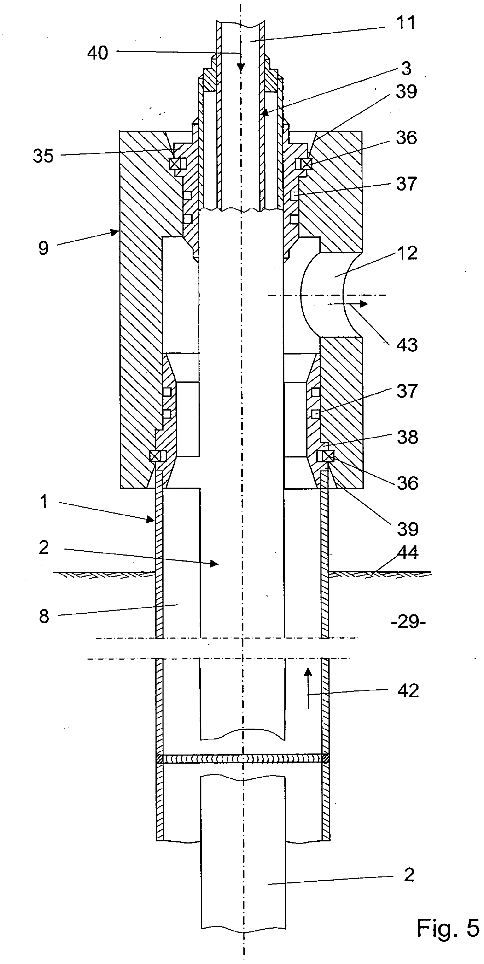

Die Figur 5 zeigt als Alternative für die Halterung des Strömungsrohres 2 im Wärmetauscherrohr 1 eine sogenannte hängende Anordnung, was bedeutet, dass das Strömungsrohr 2 in dem oberhalb des Erdbodens angeordneten Sondenkopf 9 hängend angeordnet ist.

Zu diesem Zweck ist vorgesehen, dass am obersten Strömungsrohr 2 eine Haltebüchse 35 angebracht ist, die gegenüber dem Sondenkopf 9 mit einem Sprengring 36 abgestützt ist.

Zu diesem Zweck weist der Sondenkopf 9 radial einwärts eine Anlaufschräge 39 auf, und wenn das Strömungsrohr 2 von oben her in den Sondenkopf 9 eingesteckt wird, rastet der Sprengring 36 in die zugeordnete Nut am Innenumfang des Sondenkopfes 9 ein. Das Strömungsrohr 2 hält vom Deckel 6 (Fig. 3) den doppelten Abstand der maximalen Längendehnung des Strömungsrohres 2.

Hierbei wird es bevorzugt, wenn der Sprengring 36 im Querschnitt quadratisch ausgebildet ist, um eine möglichst gute Kraftübertragung von der Haltebüchse 35 auf den Sondenkopf 9 zu ermöglichen.

Unterhalb des Sprengringes 36 sind ein oder mehrere speziell angefertigte LippenDichtungen 37 angeordnet.

Der gleiche Vorgang des Einrastens erfolgt auch von der gegenüberliegenden Seite, wie es in Figur 5 etwa in der Mitte dargestellt ist. Auch hier ist eine Anlaufschräge 39 am Innenumfang des Sondenkopfes 9 angeordnet, und der Haltering weist eine Nut und einen darin eingelegten Sprengring 36 auf. Zur Montage wurde zuvor auf das oberste Wärmetauscherrohr 1 zunächst die Kupplungsbüchse 38 befestigt. Danach wird der Sondenkopf 9 nach Fig. 5 darauf befestigt. Danach werden die einzelnen als Module ausgebildeten Strömungsrohre 2 in die Wärmetauscherrohre 1 hineingesteckt und miteinander verkuppelt oder verschweißt und das oberste Strömungsrohr mit der aufgeschweißten Haltebüchse 35 wird mit dem vorletzten Strömungsrohr 2 gekuppelt und in das Wärmetauscherrohr 1 hineingelassen, bis es zu einer automatischen Einrastung in den Zustand nach Fig. 5 zwischen dem Strömungsrohr 2 und dem Sondenkopf 9 kommt.

Vorausgesetzt hierbei ist stets, dass die vorher erwähnten Zentrierfedern 24 angebracht werden, um eine sich über die gesamte Länge erstreckende Zentrierung zwischen dem Strömungsrohr 2 und dem Innenumfang des Wärmetauscherrohrs 1 zu ermöglichen.

In Figur 5 ist im Übrigen noch dargestellt, dass das Wärmeträgermedium in Pfeilrichtung 42 durch den Ringkanal 8 nach oben strömt und in Pfeilrichtung 43 den Anschlussstutzen 12 verlässt.

Umgekehrt strömt das Wärmeträgermedium in Pfeilrichtung 40 durch den Innenumfang des Strömungsrohres 2 nach unten.

Es wird nochmals darauf hingewiesen, dass im Bereich des Sondenkopfes 9 jeweils eine Kupplungsbüchse 38 angeordnet ist, die am Außenumfang des Wärmetauscherrohrs 1 angeschweißt ist.

Ferner ist noch dargestellt, dass das Wärmetauscherrohr 1 um einen bestimmten Abstand aus dem Erdreich 44 nach oben herausragt, um den erfindungsgemäßen, um 360 Grad drehbaren, Sondenkopf anzubringen.

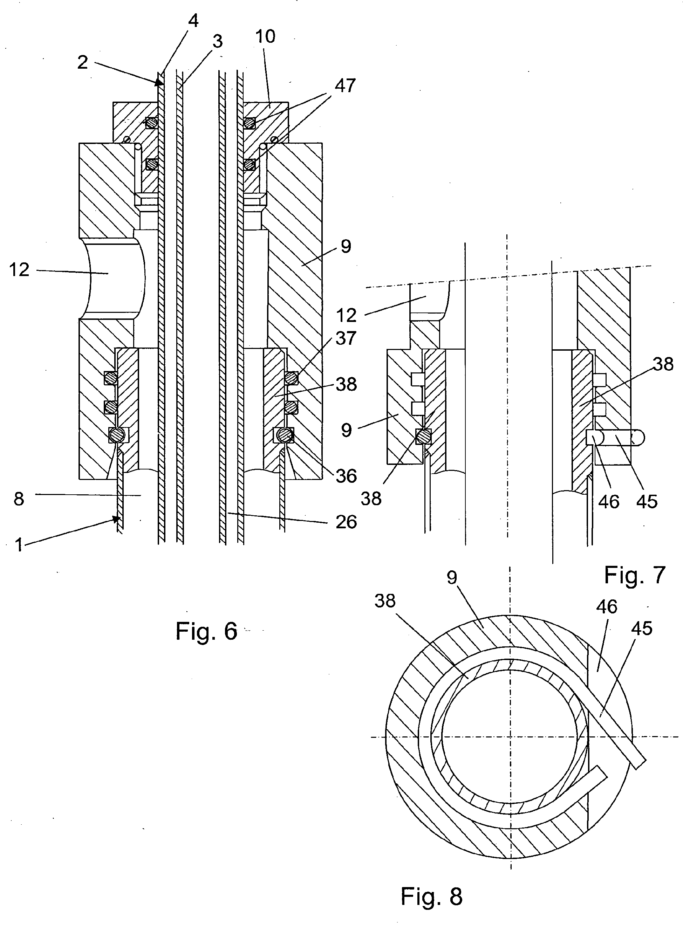

Die Figuren 6, 7 und 8 zeigen verschiedene Einzelheiten einer gegenüber der Figur 5 abweichenden Befestigung zwischen Strömungsrohr 2 und Wärmetauscherrohr 1.

Die Figuren 6 und 7 zeigen, dass anstatt einer hängenden Aufhängung des Strömungsrohres 2 im Wärmetauscherrohr 1 über den in Figur 5 dargestellten Sondenkopf 9 auch eine stehende Anordnung des Strömungsrohres 2 im Wärmetauscherrohr 1 vorgesehen sein kann.

In diesem Fall entfällt die Haltebüchse 35 nach Figur 5, und das Strömungsrohr 2 steht unten fußseitig an der Stirnseite des Wärmetauscherrohrs 1 auf.

Es handelt sich also um einen stehenden Aufbau, und es ist erkennbar, dass die Kupplungsbüchse 38 mit den vorher beschriebenen Dichtungen 37 vorhanden ist, wobei der Sprengring 36 auch einen runden Querschnitt aufweisen kann.

Es ist ferner erkennbar, dass am Außenumfang des Strömungsrohres 2 im Abstand voneinander angeordnete Lippendichtungen 47 vorhanden sind, die eine abdichtende axiale Ausdehnung des Wärmetauscherrohres 1 im Bereich der Buchse 10 des Sondenkopfes 9 ermöglichen und eine besonders lange Lebensdauer aufweisen.

Die Figur 7 zeigt, dass statt der Sprengringe 36 auch ein sogenannter Sperrstab 45 verwendet werden kann. Dies ist in den Figuren 7 und 8 näher dargestellt. Der Sperrstab 45 besteht bevorzugt aus einem hochwertigen Kunststoffstab, der bevorzugt einen runden Querschnitt aufweist und der als Federelement dient und in einer Halbnut 46 am Außenumfang der Kupplungsbüchse 38 eingreift. Ferner greift er in eine zugeordnete Halbnut 46 am Innenumfang des Sondenkopfes 9 ein, so dass damit eine rastende und aber auch lösbare Verbindung zwischen dem Sondenkopf 9 und der Kupplungsbüchse 38 gegeben ist.

Der Sperrstab 45 ist aus einem sehr elastischen, widerstandsfähigen Kunststoffmaterial und man kann ihn ohne weiteres wieder herausziehen und damit die gesamte Verbindung zwischen dem Wärmetauscherrohr 1 und dem Sondenkopf 9 lösen.

**Zeichnunaslegende**

| | | | |
|---|---|---|---|
| 1 | Wärmetauscherrohr | 25 | Zentrierfeder (innen) |
| 2 | Strömungsrohr (Doppelmantel-Koaxialrohr) | 26 | Vakuumraum |
| | | 27 | Dehnungsring |
| 3 | Innenmantel | 28 | Dehnungsring |
| 4 | Außenmantel | 29 | Verfüllungsraum |
| 5 | Kupplungsmuffe | 30 | Pfeilrichtung |
| 6 | Sondenfuß | 31 | Rohrstummel |
| 7 | Strömungsverbindung | 32 | Rohranschluss |
| 8 | Ringkanal (Rücklauf) | 33 | Vorlaufraum (Wärmeträger) |
| 9 | Sondenkopf | 34 | Verschluss |
| 10 | Buchse | 35 | Haltebuchse |
| 11 | Anschluss | 36 | Sprengring (quadratisch) |
| 12 | Anschlussstutzen | 37 | O-Ring-Dichtung |
| 13 | Ende | 38 | Kupplungsbuchse |
| 14 | Balg | 39 | Anlaufschräge |
| 15 | Deckel | 40 | Pfeilrichtung |
| 16 | Deckel | 41 | Pfeilrichtung |
| 17 | Deckel | 42 | Pfeilrichtung |
| 18 | Schräge | 43 | Pfeilrichtung |
| 19 | Paßring | 44 | Erdreich |
| 20 | Endmodul | 45 | Sperrstab |
| 21 | Modul | 46 | Halbnut |
| 22 | Steckverbindung | 47 | Lippendichtung |
| 23 | Verschraubung (Ermeto) | 48 | Orbitalschweißung |
| 24 | Zentrierfeder (außen) | | |

## Patentansprüche

1. Modulare Erdwärmesonde, bevorzugt aus Edelstahl, mit einem äußeren Wärmetauscherrohr (1), einem inneren, zum Wärmetauscherrohr koaxialen Strömungsrohr (2), das im Bereich eines Sondenfußes (6) mit einem Ringkanal (8) zwischen Wärmetauscherrohr (1) und Strömungsrohr (2) in Strömungsverbindung steht, wobei mit dem Wärmetauscherrohr (1) ein Sondenkopf (9) verbunden ist zum Zu- und Abführen eines das Strömungsrohr (2) und einem den Ringkanal (8) zwischen Strömungsrohr und Wärmetauscherrohr gegensinnig durchströmenden Wärmeträger, wobei das Strömungsrohr (1) gegenüber dem Ringkanal (8) zwischen Strömungsrohr (2) und Wärmetauscherrohr (1) eine Wärmeisolierung aufweist, die als Vakuumkammer (26) ausgebildet ist, **dadurch gekennzeichnet, dass** das Strömungsrohr (2) einen evakuierten Doppelmantel, bestehend aus einem Innenmantel (3) und einem Aussenmantel (4), aufweist, wobei ein Ende (13) des Außenmantels (4) des Strömungsrohrs (2) gegenüber dem Innenmantel (3) axial verschiebbar abgestützt ist.

2. Erdwärmesonde nach Anspruch 1, **dadurch gekennzeichnet, dass** der Sondenkopf (9) um 360 Grad drehbar an dem Wärmetauschrohr (1) anbringbar ist.

3. Erdwärmesonde nach Anspruch 2, **dadurch gekennzeichnet, dass** das axial verschiebbare Ende (13) des Außenmantels (4) des Strömungsrohrs (2) axial an einem den Innenmantel (3) umschließenden, evakuierten Balg (14) abgestützt ist.

4. Erdwärmesonde nach einem der Ansprüche 1 bis 3, **dadurch gekennzeichnet, dass** das Strömungsrohr (2) den verschiebefest mit dem Wärmetauscherrohr (1) verbundenen Sondenkopf (9) axial verschiebbar durchsetzt.

5. Erdwärmesonde nach einem der Ansprüche 1 bis 4, **dadurch gekennzeichnet, dass** das Strömungsrohr (2) aus einzelnen je für sich mit einer Wärmeisolierung versehenen Rohrstutzen über Kupplungsmuffen (5, 22) oder Orbitalschweißung zusammengesetzt ist.

6. Erdwärmesonde nach Anspruch 5, **dadurch gekennzeichnet, dass** der Innenmantel (3) des evakuierten Doppelmantels der Rohrstutzen über den Außenmantel (4) axial vorsteht und dass die vorstehenden Innenmantel (3) der Rohrstutzen miteinander über die Kupplungsmuffen (5, 22) oder Orbitalschweißung verbunden sind.

7. Erdwärmesonde nach einem der Ansprüche 1 bis 6, **dadurch gekennzeichnet, dass** der evakuierte Zwischenraum des Doppelmantels des Strömungsrohrs (2) kein Adsorptionsmittel aufweisen muss.

8. Erdwärmesonde nach einem der Ansprüche 1 bis 7, **dadurch gekennzeichnet, dass** das Wärmetauscherrohr aus zwei miteinander verbundenen Modulen (20, 21) besteht, wobei im Bereich einer Steckverbindung (22) zwischen den Modulen (20, 21) jeweils ein Dehnungsring (27, 28) formschlüssig auf den Außenmantel des Wärmetauscherrohrs (1) aufsitzt, wobei der Dehnungsring (27, 28) aus einem elastischen Material, bevorzugt einem Kunststoffschaum-Material besteht

9. Erdwärmesonde nach einem der Ansprüche 1 bis 8, **dadurch gekennzeichnet, dass** im Ringkanal zwischen dem Innenumfang des Wärmetauscherrohrs (1) und den Außenumfang des Strömungsrohrs (2) Zentrierfedern (24) angeordnet sind.

10. Erdwärmesonde nach Anspruch 9, **dadurch gekennzeichnet, dass** Zentrierfedern (24) als Ovalfedern ausgebildet sind und quasi-ovale Federwindungen bilden, wobei jede Federwindung zur benachbarten Federwindung jeweils um 45° am Umfang versetzt ist oder andere gewählte Winkel, um so eine gleichmäßige Abstützwirkung auf den Innenraum zu erzielen und so das Strömungsrohr (2) mit möglichst strömungsgünstigen Zentrierfedern (24) zu zentrieren.

11. Erdwärmesonde nach einem der Ansprüche 1 bis 10, **dadurch gekennzeichnet, dass** auch in der Vakuumkammer (26) Zentrierfedern (25) angeordnet sind.

12. Erdwärmesonde nach Anspruch 8 in Verbindung mit Anspruch 3, **dadurch gekennzeichnet, dass** sich die Vakuumkammer (26) in jedem Modul (20, 21) von einem Passring (19) ausgehend axial nach unten durch einen Deckel (16) hindurch erstreckt und ebenfalls hindurchgehend durch den Wärmeausdehnungsbalg (14) bis zu einem weiteren Deckel (15), so dass auch der Balg (14) von der Vakuumkammer (26) durchsetzt ist.

13. Erdwärmesonde nach einem der Ansprüche 1 bis 11, **dadurch gekennzeichnet, dass** das Strömungsrohr (2) in dem oberhalb des Erdbodens angeordneten Sondenkopf (9) hängend oder alternativ gleitend bei stehender Anordnung des Strömungsrohres (2) an einem Deckel (17) (Fig. 3) angeordnet ist.

14. Verfahren zur Einbringung eines Vakuums in eine Erdwärmesonde nach einem der Ansprüche 1 bis 13, **dadurch gekennzeichnet, dass** an der Vakuumkammer (26) ein oder mehrere radiale Rohrstummel (31) angeordnet sind, an denen jeweils ein Rohranschluss (32) abdichtend angesetzt wird, an den ein Vakuum angelegt wird, und dass nach der Einbringung des Vakuums in den Vakuumraum (26) jeweils Verschlüsse (34) an den Rohrstummeln (31) durch Abschweißen hergestellt und die Rohranschlüsse (32) abgetrennt werden.

15. Verfahren nach Anspruch 14, **dadurch gekennzeichnet, dass** zur Erzeugung des Vakuums mit einer als Widerstandsheizung ausgebildeten Erwärmungsanlage , wobei das Strömungsrohr 2, bestehend aus Außenmantel 4 und Innenmantel 3, die den ringförmigen Hohlraum des Strömungsrohrs (2) bilden, bis über den Siedepunkt von Wasser erwärmt wird und dadurch die in der mikroskopisch zerklüfteten Oberfläche gefangenen Wassermoleküle entfernt, und ebenfalls andere flüchtige Stoffe.

## Claims

1. Modular geothermal probe, preferably made of stainless steel, having an outer heat exchanger pipe (1), an inner flow pipe (2) which is coaxial to the heat exchanger pipe and which is in flow connection with an annular channel (8) between heat exchanger pipe (1) and flow pipe (2) in the region of a probe foot (6), wherein a probe head (9) is connected to the heat exchanger pipe (1) for feeding and removing a heat carrier flowing through the flow pipe (2) and a heat carrier flowing through the annular channel (8) between flow pipe and heat exchanger pipe in the opposite direction, wherein the flow pipe (1) has heat insulation, which is designed as a vacuum chamber (26), with respect to the annular channel (8) between flow pipe (2) and heat exchanger pipe (1), **characterised in that** the flow pipe (2) has an evacuated double casing consisting of an inner casing (3) and an outer casing (4), wherein one end (13) of the outer casing (4) of the flow pipe (2) is supported to be axially displaceable with respect to the inner casing (3).

2. Geothermal probe according to claim 1, **characterised in that** the probe head (9) can be attached to the heat exchanger pipe (1) to be rotatable by 360 degrees.

3. Geothermal probe according to claim 2, **characterised in that** the axially displaceable end (13) of the outer casing (4) of the flow pipe (2) is supported axially on evacuated bellows (14) surrounding the inner casing (3).

4. Geothermal probe according to one of claims 1 to 3, **characterised in that** the flow pipe (2) penetrates in axially displaceable manner the probe head (9) connected to the heat exchanger pipe (1) to be resistant to displacement.

5. Geothermal probe according to one of claims 1 to 4, **characterised in that** the flow pipe (2) is composed of individual pipe joints provided in each case for themselves with heat insulation via coupling boxes (5, 22) or orbital welding.

6. Geothermal probe according to claim 5, **characterised in that** the inner casing (3) of the evacuated double casing of the pipe joints projects axially beyond the outer casing (4) and **in that** the projecting inner casing (3) of the pipe joints are connected to one another via the coupling boxes (5, 22) or orbital welding.

7. Geothermal probe according to one of claims 1 to 6, **characterised in that** the evacuated gap of the double casing of the flow pipe (2) must have no adsorbing agent.

8. Geothermal probe according to one of claims 1 to 7, **characterised in that** the heat exchanger pipe consists of two modules (20, 21) connected to one another, wherein in the region of a plug connection (22) between the modules (20, 21), in each case an expansion ring (27, 28) sits positively on the outer casing of the heat exchanger pipe (1), wherein the expansion ring (27, 28) consists of a resilient material, preferably a plastic foam material.

9. Geothermal probe according to one of claims 1 to 8, **characterised in that** centring springs (24) are arranged in the annular channel between the inner periphery of the heat exchanger pipe (1) and the outer periphery of the flow pipe (2).

10. Geothermal probe according to claim 9, **characterised in that** centring springs (24) are designed as oval springs and form quasi-oval spring windings, wherein each spring winding is offset on the periphery in each case by 45° or other selected angle to the adjacent spring winding in order to thus achieve a uniform supporting effect on the interior and thus to centre the flow pipe (2) with centring springs (24) which are as favourable to flow as possible.

11. Geothermal probe according to one of claims 1 to 10, **characterised in that** centring springs (25) are also arranged in the vacuum chamber (26).

12. Geothermal probe according to claim 8 in conjunction with claim 3, **characterised in that** the vacuum chamber (26) in each module (20, 21) extends starting from an adjusting ring (19) axially downwards through a lid (16) and likewise passing through the heat expansion bellows (14) as far as a further lid (15) so that even the bellows (14) are penetrated by the vacuum chamber (26).

13. Geothermal probe according to one of claims 1 to 11, **characterised in that** the flow pipe (2) is arranged on a lid (17) (Figure 3) in the probe head (9) arranged above the ground in suspended manner or alternatively in sliding manner for a standing arrangement of the flow pipe (2).

14. Method for introducing a vacuum into a geothermal probe according to one of claims 1 to 13, **characterised in that** one or more radial hollow bolts (31), on which in each case a pipe connection (32) is placed in sealing manner, to which a vacuum is applied, are arranged on the vacuum chamber (26), and **in that** after introducing the vacuum into the vacuum chamber (26), in each case closures (34) are produced at the hollow bolts (31) by cutting by torch and the pipe connections (32) are detached.

15. Method according to claim 14, **characterised in that** to generate the vacuum using a heating system designed as resistance heating, wherein the flow pipe (2), consisting of outer casing (4) and inner casing (3) which form the annular cavity of the flow pipe (2), is heated to above the boiling point of water and thus removes the water molecules caught in the microscopically fissured surface, and likewise other volatile materials.

## Revendications

1. Sonde géothermique modulaire, de préférence en acier fin, avec un tube échangeur de chaleur extérieur (1) et un tube d'écoulement intérieur (2) qui est coaxial par rapport au tube échangeur de chaleur et qui est en communication d'écoulement, dans la zone d'une base de sonde (6), avec un conduit annulaire (8) entre le tube échangeur de chaleur (1) et le tube d'écoulement (2), une tête de sonde (9) étant reliée au tube échangeur de chaleur (1) afin d'amener et d'évacuer un fluide caloporteur qui traverse en sens inverse le tube d'écoulement (2) et le conduit annulaire (8) entre ledit tube d'écoulement et le tube échangeur de chaleur, le tube d'écoulement (1) présentant par rapport au conduit annulaire (8) entre le tube d'écoulement (2) et le tube échangeur de chaleur (1) une isolation thermique qui est conçue comme une chambre à vide (26),
**caractérisée en ce que** le tube d'écoulement (2) comporte une gaine double à vide composée d'une gaine intérieure (3) et d'une gaine extérieure (4), une extrémité (13) de la gaine extérieure (4) du tube d'écoulement (2) étant en appui, mobile axialement, par rapport à la gaine intérieure (3).

2. Sonde géothermique selon la revendication 1, **caractérisée en ce que** la tête de sonde (9) est apte à être montée sur le tube échangeur de chaleur (1) en pouvant tourner de 360 degrés.

3. Sonde géothermique selon la revendication 2, **caractérisée en ce que** l'extrémité (13) apte à coulisser axialement de la gaine extérieure (4) du tube d'écoulement (2) est en appui axialement contre un soufflet à vide (14) qui entoure la gaine intérieure (3).

4. Sonde géothermique selon l'une des revendications 1 à 3, **caractérisée en ce que** le tube d'écoulement (2) traverse, apte à coulisser axialement, la tête de sonde (9) qui est reliée, fixe en translation, au tube échangeur de chaleur (1).

5. Sonde géothermique selon l'une des revendications 1 à 4, **caractérisée en ce que** le tube d'écoulement (2) est assemblé, par l'intermédiaire de manchons d'accouplement (5, 22) ou d'une soudure orbitale, à partir de tubulures individuelles pourvues chacune d'une isolation thermique.

6. Sonde géothermique selon la revendication 5, **caractérisée en ce que** la gaine intérieure (3) de la gaine double à vide des tubulures dépasse axialement de la gaine extérieure (4), et **en ce que** les gaines intérieures saillantes (3) des tubulures sont reliées entre elles par l'intermédiaire des manchons d'accouplement (5, 22) ou d'une soudure orbitale.

7. Sonde géothermique selon l'une des revendications 1 à 6, **caractérisée en ce que** l'espace intermédiaire à vide de la gaine double du tube d'écoulement (2) n'a pas à présenter d'adsorbant.

8. Sonde géothermique selon l'une des revendications 1 à 7, **caractérisée en ce que** le tube échangeur de chaleur se compose de deux modules (20, 21) reliés entre eux, une bague à dilatation (27, 27) étant posée par complémentarité de forme sur la gaine extérieure du tube échangeur de chaleur (1) dans la zone de chaque raccordement (22) entre les modules (20, 21), ladite bague à dilatation (37, 27) se composant d'un matériau élastique, de préférence un matériau en mousse de matière plastique.

9. Sonde géothermique selon l'une des revendications 1 à 8, **caractérisée en ce que** dans le conduit annulaire entre la circonférence intérieure du tube échangeur de chaleur (1) et la circonférence extérieure du tube d'écoulement (2) sont disposés des ressorts de centrage.

10. Sonde géothermique selon la revendication 9, **caractérisée en ce que** les ressorts de centrage (24) sont conçus comme des ressorts ovales et forment des spires de ressort quasi ovales, chaque spire de ressort étant décalée de 45° sur la circonférence par rapport à la spire de ressort voisine ou suivant d'autres angles choisis, afin d'obtenir ainsi une action d'appui régulière sur l'espace intérieur, et de centrer ainsi le tube d'écoulement avec des ressorts de centrage (24) aussi favorables que possible à l'écoulement.

11. Sonde géothermique selon l'une des revendications 1 à 10, **caractérisée en ce que** des ressorts de centrage (25) sont aussi disposés dans la chambre à vide (26).

12. Sonde géothermique selon la revendication 8 en combinaison avec la revendication 3, **caractérisée en ce que** la chambre à vide (26) s'étend dans chaque module (20, 21) à partir d'une bague d'ajustement (19), axialement vers le bas à travers un couvercle (16) et aussi à travers le soufflet à dilatation thermique (14), jusqu'à un autre couvercle (15), de sorte que le soufflet (14) est traversé lui aussi par la chambre à vide (26).

13. Sonde géothermique selon l'une des revendications 1 à 11, **caractérisée en ce que** le tube d'écoulement (2) est disposé en suspension ou, à titre de variante, en glissant quand il est à la verticale sur un couvercle (17) dans la tête de sonde (9) disposée au-dessus du sol (fig. 3).

14. Procédé pour établir un vide dans une sonde géothermique selon l'une des revendications 1 à 13, **caractérisé en ce qu'**il est prévu sur la chambre à vide (26) un ou plusieurs bouts de tube radiaux (31) contre chacun desquels est posé de manière étanche un raccord de tube (32) auquel est appliqué un vide, et **en ce qu'**après l'établissement du vide dans l'espace à vide (26), un obturateur (34) est fabriqué par soud EP 10 004 479.1 bouts de tube (31), et les raccords
séparés.

15. Procédé selon la revendication 14, **caractérisé en ce que** pour produire le vide, le tube d'écoulement 2, composé d'une gaine extérieure 4 et d'une gaine intérieure 3 qui forment la cavité annulaire du tube d'écoulement, est porté avec une installation de chauffage conçue comme un chauffage à résistance au-dessus du point d'ébullition de l'eau, et les molécules d'eau recueillies dans la surface fissurée à l'échelle microscopique sont ainsi éliminées, ainsi que d'autres substances volatiles.
